# EUROPÄISCHE PATENTSCHRIFT

(11) **EP 4 185 793 B1**
(45) Veröffentlichungstag und Bekanntmachung des Hinweises auf die Patenterteilung: **07.08.2024**
(21) Anmeldenummer: 21735156.8
(22) Anmeldetag: 21.06.2021
(51) Int. Cl.: F16H 57/04

(54) **GETRIEBE**
GEARING SYSTEM
SYSTÈME D'ENGRENAGE

(30) Priorität: 21.07.2020 CN 202010703782; 14.10.2020 DE 102020006309
(43) Veröffentlichungstag der Anmeldung: 31.05.2023
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2021/025218
(87) Internationale Veröffentlichungsnummer: WO 2022/017636

(56) Entgegenhaltungen:
- EP-A1- 3 019 774
- CN-U- 212 338 100
- PL-B1- 159 326
- US-A- 5 245 891
- US-A1- 2007 216 237

## Beschreibung

Die Erfindung betrifft einen Getriebemotor, aufweisend ein Getriebe, einen Elektromotor und einen Adapterflansch.

Es ist allgemein bekannt, dass ein Getriebe über Lager drehbar gelagerte Wellen und Verzahnungsteile aufweist.

Aus der US 5 245 891 A ist ein Übertragungsreservoir bekannt.

Aus der US 2005 / 0 236 139 A1 ist ein Getriebe bekannt.

Aus der DE 10 2016 103 029 A1 ist ein Gehäuse für einen Kraftfahrzeugsantriebsstrang bekannt.

Aus der JP 2018- 084 279 A ist eine Kühlanordnung bekannt.

Aus der DE 694 07 700 T2 ist ein Getriebemotorantrieb bekannt.

Aus der JP S61- 282 665 A ist eine Schmierölkühlstruktur bekannt.

Aus der JP H03- 130 948 U ist ein Getriebe bekannt.

Aus der JP 2008- 025 768 A ist eine Gehäusewand bekannt.

Aus der FR 621 279 A ist eine Kühlanordnung für Maschinen bekannt.

Aus der US 2007/ 0 216 237 A1 ist **als nächstliegender Stand der Technik** ein Industriegetriebe bekannt.

Aus der DE 44 13 759 A1 ist ein Getriebe für Personenbeförderung bekannt.

Aus der DD 235 708 A1 ist ein Getriebegehäuse für Tieftemperaturen bekannt.

Aus der DE 10 2014 008 330 A1 ist ein Getriebemotor bekannt.

Aus der DE 10 2008 004 337 A1 ist ein Gehäuse für ein Getriebe bekannt.

Aus der DE 10 2007 020 453 A1 ist ein Getriebe bekannt.

**Aus der** CN 212 338 100 U **ist ein Getriebe bekannt.**

**Aus der** EP 3 019 774 A1 **ist ein Getriebemotor bekannt.**

**Aus der** US 5 245 891 A **ist ein Übertragungsreservoir bekannt.**

**Aus der** PL 159 326 B1 **ist ein Kettenradantrieb bekannt.**

Der Erfindung liegt daher die Aufgabe zugrunde, einen Getriebemotor weiterzubilden, wobei die Herstellung des Getriebemotors kostengünstig und der Getriebemotor kompakt sein soll.

Erfindungsgemäß wird die Aufgabe bei dem Getriebemotor nach den in Anspruch 1 angegebenen Merkmalen gelöst.

Wichtige Merkmale der Erfindung bei dem Getriebe sind, dass das Getriebe mit einem Gehäuse vorgesehen ist, das ein Gehäuseteil aufweist, welches Verzahnungsteile und Öl zumindest teilweise gehäusebildend umgibt,
wobei
- die Wandstärke des Gehäuseteils in einem oder mehreren Bereichen des Gehäuseteils periodisch schwankt, insbesondere entlang einer geraden Richtung,
   und in dem oder den Bereichen die äußere Oberfläche glatt, insbesondere eben, ausgeführt ist
- oder dass an der der Innenseite, insbesondere also an der dem Öl zugewandten und/oder inneren Oberfläche, des Gehäuseteils Bereiche mit Vertiefungen, insbesondere voneinander regelmäßig beabstandeten Vertiefungen, ausgebildet sind, insbesondere wobei die Wandstärke in dem oder den Bereichen synchron mit den Vertiefungen variiert.

Von Vorteil ist dabei, dass durch die Vertiefungen die Innenfläche vergrößert wird und somit der Wärmeübergangswiderstand vom Öl zum Gehäuse verringert wird. Außerdem ist durch die glatte, insbesondere ebene Außenfläche zwar die Wandstärke nicht konstant, aber die Wärmekapazität zum Aufspreizen der in das Gehäuse eingeströmten Wärme vergrößert. Auf diese Weise ist also ein schnelles Aufspreizen des Wärmestroms und danach Abströmen in die Umgebung ermöglicht.

Außerdem strömt das Öl bei Betrieb des Getriebes an den Vertiefungen und auch senkrecht oder quer zu den Vertiefungen. Auf diese Weise wird die Strömung des Öls turbulent und somit der Wärmeübergangswiderstand vom Öl zum Gehäuse verringert.

Bei einer vorteilhaften Ausgestaltung erstreckt sich jede der Vertiefungen dabei senkrecht zur axialen Richtung, also senkrecht zur Drehachse der eintreibenden Welle, mehr als in axialer Richtung. Von Vorteil ist dabei, dass bei vertikal ausgerichteter eintreibender Welle nach dem Hochspritzen in vertikaler Richtung abströmendes Öl quer zu den Vertiefungen strömt und somit turbulent strömt.

Bei einer vorteilhaften Ausgestaltung sind der oder die Bereiche unterhalb des Ölpegels des Öls angeordnet, insbesondere unterhalb des sich bei Stillstand des Getriebes einstellenden Ölpegels angeordnet. Von Vorteil ist dabei, dass die Wärme aus dem Ölsumpf möglichst effizient und schnell über das Gehäuse an die Umgebung abführbar ist.

Bei einer vorteilhaften Ausgestaltung sind in zweiten Bereichen an der Außenseite des Gehäuseteils regelmäßig voneinander beabstandete Vertiefungen ausgebildet und in diesen zweiten Bereichen ist die Wandstärke konstant,

insbesondere wobei auch an der Innenseite des Gehäuseteils regelmäßig voneinander beabstandete Vertiefungen ausgebildet sind, die derart von den an der Außenseite des Gehäuseteils ausgebildeten, regelmäßig voneinander beabstandeten Vertiefungen beabstandet sind, dass die Wandstärke konstant ist. Von Vorteil ist dabei, dass einerseits eine Oberflächenvergrößerung ausgeführt ist und andererseits ein herstellerkennzeichnendes Design am Gehäuse erkennbar ausbildbar ist.

Vorzugsweise sind die zweiten Bereiche oberhalb des Ölsumpfes, also oberhalb des bei Stillstand sich einstellenden Ölpegels, angeordnet.

Bei einer vorteilhaften Ausgestaltung erstreckt sich in den zweiten Bereichen jede der Vertiefungen senkrecht zur axialen Richtung, also senkrecht zur Drehachse der eintreibenden Welle, mehr als in axialer Richtung. Von Vorteil ist dabei, dass die Vertiefungen länglich ausgeformt sind und somit eine turbulente Strömung von konvektiv angetriebener, nicht parallel zur jeweiligen Vertiefung sich bewegender Luft ausbildbar ist.

Bei einer vorteilhaften Ausgestaltung ist mit dem Gehäuseteil ein Getriebedeckel verbunden, insbesondere öldicht verbunden, wobei das Gehäuseteil zusammen mit dem Getriebedeckel das Öl begrenzt,
wobei zumindest an einem Bereich des Getriebedeckels an der Außenseite des Getriebedeckels regelmäßig voneinander beabstandete Vertiefungen ausgebildet sind und in diesem Bereich die Wandstärke konstant ist,

insbesondere wobei auch an der Innenseite des Getriebedeckels regelmäßig voneinander beabstandete Vertiefungen ausgebildet sind, die derart von den an der Außenseite des Getriebedeckels ausgebildeten, regelmäßig voneinander beabstandeten Vertiefungen beabstandet sind, dass die Wandstärke konstant ist. Von Vorteil ist dabei, dass die vergrößerte Wärmekapazität ein schnelles Aufspreizen des Wärmestroms im Gehäuse ermöglicht und außerdem Temperaturspitzen besser glättbar sind.

Bei einer vorteilhaften Ausgestaltung sind an der Innenseite des Getriebedeckels Versteifungsrippen ausgeformt, die sich gegenseitig kreuzen,

insbesondere wobei zwischen den Versteifungsrippen jeweilige Vertiefungen und Erhebungen ausgebildet sind. Von Vorteil ist dabei, dass an den Versteifungsrippen vorbeiströmendes Öl turbulent strömt.

Bei einer vorteilhaften Ausgestaltung schwankt die Wandstärke des Getriebedeckels entlang einer ersten der Versteifungsrippen periodisch, insbesondere entlang einer Richtung, in welcher die erste Versteifungsrippe am weitesten ausgedehnt ist, wobei die Innenseite der ersten Versteifungsrippe glatt, insbesondere eben, ausgeführt ist.

Von Vorteil ist dabei, dass die Versteifungsrippe eine hohe Wärmekapazität hat und somit ein Aufspreizen des Wärmestroms ermöglicht.

Bei einer vorteilhaften Ausgestaltung gleicht die räumliche Periodenlänge des Verlaufs der Wandstärke im ersten Bereich des Gehäuseteils der räumlichen Periodenlänge des Verlaufs der Vertiefungen im zweiten Bereich und/oder gleicht der räumlichen Periodenlänge des Verlaufs der Wandstärke entlang der ersten der Versteifungsrippen des Getriebedeckels. Von Vorteil ist dabei, dass durch den synchronen Verlauf, also den periodischen Verlauf mit konstantem Phasenbezug, die Wandstärke im zweiten Bereich konstant ausführbar ist.

Bei der Erfindung weist der Getriebemotor ein Getriebe, einen Elektromotor und einen Adapterflansch, insbesondere einen zwischen dem Getriebe und dem Elektromotor angeordnetem Adapterflansch, auf,
wobei der Adapterflansch einen zur Drehachse einer eintreibenden Welle des Getriebes rotationssymmetrisch ausgeformten, ringförmigen Grundkörper aufweist, an welchem ein Axialvorsprung angeformt ist,
wobei der Axialvorsprung auf der vom Elektromotor abgewandten Seite des Adapterflansches angeordnet ist,
   - wobei der vom Gehäuseteil überdeckte Radialabstandsbereich in einem von dem Axialvorsprung nicht überdeckten Umfangswinkelbereich mit dem vom Axialvorsprung überdeckten Radialabstandsbereich überlappt,
      wobei der vom Gehäuseteil in axialer Richtung überdeckte Bereich mit dem von dem Axialvorsprung in axialer Richtung überdeckten Bereich überlappt, insbesondere in dem
von dem Axialvorsprung nicht überdeckten Umfangswinkelbereich und in dem vom Axialvorsprung überdeckten Radialabstandsbereich,
   mit dem vom Axialvorsprung überdeckten Radialabstandsbereich überlappt,
   insbesondere wobei die axiale Richtung parallel zur Drehachse der eintreibenden Welle ausgerichtet ist, der Radialabstand der Abstand zur Drehachse der eintreibenden Welle ist und/oder die Umfangsrichtung sich auf diese Drehachse der eintreibenden Welle bezieht,
      - wobei der Axialvorsprung in Umfangsrichtung unterbrochen ausgeführt ist und das Gehäuseteil in den unterbrochenen Bereich hineinragt.

Von Vorteil ist dabei, dass der Axialvorsprung zwar einerseits zur zentrierenden Verbindung mit dem Elektromotor und dem Getriebe geeignet ausgeführt ist, aber andererseits möglichst kompakt ausgeführt ist. Denn die Zentrierung erfordert zumindest auch eine zylindrische, fein bearbeitete Fläche, an welcher die Ausrichtung erfolgt. Erfindungsgemäß ist aber die zylindrische Fläche in Umfangsrichtung unterbrochen, also nicht vollständig umlaufend ausgeführt. Somit ist dieser unterbrochene Bereich von einem Teilbereich des Gehäuseteils nutzbar, welcher das größte Verzahnungsteil des Getriebes, also das mit der abtreibenden Welle drehfest verbundene Zahnrad, gehäusebildend umgibt.

Vorzugsweise beträgt der unterbrochene Umfangswinkelbereich weniger als 180°.

Ein nicht beanspruchter Vorteil ist, dass der Adapterflansch zum Elektromotor hin einen anderen Flanschverbindungstyp, nämlich Rundflansch, als zum Getriebe hin, beispielsweise Quadratflansch, aufweist. Auch die Bohrbilder sind entsprechend verschieden verwendbar. Zum Getriebe hin ist beispielsweise ein rechteckiges und zum Motor hin ein polygonales, also einen Kreis besser annäherndes, Bohrbild anwendbar.

Dabei darf sogar der von dem von den Bohrungen des zum Elektromotor hin gewandten Bohrbildes überdeckte Radialabstandsbereich mit dem von den Bohrungen des zum Getriebe hin gewandten Bohrbildes überdeckten Radialabstandsbereich überlappen. In Umfangsrichtung sind jedoch alle Bohrungen der beiden Bohrbilder voneinander beabstandet. Die Bohrungen beider Bohrbilder sind vorzugsweise durchgehend durch den Adapterflansch ausgeführt.

Das erste, insbesondere das zum Getriebe hin gewandte und verwendete, Bohrbild ist nur in dem von dem Axialvorsprung überdeckten Umfangswinkelbereich angeordnet. Das zweite, insbesondere das zum Elektromotor hin gewandte und verwendete, Bohrbild überlappt auch mit dem von dem unterbrochenen Bereich des Axialvorsprungs überdeckten Umfangswinkelbereich. Somit sind die Symmetrieachsen der diskreten Drehsymmetrieen der beiden Bohrbilder nicht deckungsgleich, sondern voneinander beabstandet. Auf diese Weise ist der Adapterflansch besonders kompakt ausführbar. Denn durch die Beabstandung der Symmetrieachsen ist der unterbrochene Bereich zwischen dem ringförmigen Grundkörper des Adapterflansches und dem Gehäuseteil des Getriebes erst bereitstellbar.

Bei einer nicht beanspruchten vorteilhaften Ausgestaltung ist der Adapterflansch zum Elektromotor hin mit einem Rundflansch verbunden und zum Getriebe hin mit einem Rechteckflansch oder Quadratflansch verbunden. Von Vorteil ist dabei, dass verschiedene Flanschtypen mit entsprechend verschiedenen Bohrbildern und Zentrierflächen vorsehbar sind.

Bei einer nicht beanspruchten vorteilhaften Ausgestaltung weist der Adapterflansch auf seiner dem Elektromotor zugewandten Seite erste, axial gerichtete Bohrlöcher auf, durch welche Verbindungselemente, wie Gewindestangen oder Schrauben, hindurchragen, die auch durch einen Lagerflansch des Elektromotors hindurchragen,
wobei das Bohrbild der ersten Löcher bezogen auf die Drehachse der eintreibenden Welle eine diskrete Drehsymmetrie, insbesondere eine mehr als sechszählige Drehsymmetrie, aufweist. Von Vorteil ist dabei, dass die Drehachse der Rotorwelle des Elektromotors zum Adapterflansch mittig, insbesondere zentrisch, ausgerichtet ist. Somit ist eine stabile Befestigung des Adapterflansches ermöglicht.

Bei einer nicht beanspruchten vorteilhaften Ausgestaltung weist der Adapterflansch auf seiner dem Getriebe zugewandten Seite zweite, axial gerichtete Bohrlöcher auf, welche durch den Axialvorsprung des Adapterflansches und den ringförmigen Grundkörper des Adapterflansches durchgehen,
wobei durch die zweiten Bohrlöcher Verbindungselemente, wie Gewindestangen oder Schrauben, hindurchragen und in in das Gehäuseteil eingebrachte Gewindebohrungen eingeschraubt sind,
insbesondere wobei das Bohrbild der zweiten Bohrlöcher bezogen auf eine von der Drehachse der eintreibenden Welle beabstandete, zu dieser Drehachse parallel ausgerichtete Symmetrieachse eine diskrete Drehsymmetrie, insbesondere eine zweizählige Drehsymmetrie, aufweist. Von Vorteil ist dabei, dass der Getriebemotor kompakt ausführbar ist, da die mechanische getriebeseitige Schnittstelle, insbesondere Zentrierung und Befestigung, derart verschoben und angeordnet ist, dass ein unterbrochener Bereich des Axialvorsprungs vorsehbar ist und durch die Einhausung des mit der abtreibenden Welle verbundenen Verzahnungsteils zumindest teilweise befüllbar ist.

Bei einer nicht beanspruchten vorteilhaften Ausgestaltung ist der Adapterflansch an einem Aufnahmeteil des Getriebes zentriert, insbesondere ist der Adapterflansch an dem Aufnahmeteil des Getriebes koaxial zur Drehachse der eintreibenden Welle ausgerichtet und zentriert, ist, wobei das Aufnahmeteil, insbesondere mittels eines zylindrischen Zentrierkragens, am Gehäuseteil des Getriebes ausgerichtet ist, insbesondere zentriert ist, insbesondere wobei das Aufnahmeteil mittels Schrauben mit dem Gehäuseteil verbunden ist, insbesondere wobei das Aufnahmeteil von Schraubenköpfen der in axial gerichtete Gewindebohrungen des Gehäuseteils eingeschraubten Schrauben zum Gehäuseteil hingedrückt gehalten ist. Von Vorteil ist dabei, dass der Adapterflansch am Aufnahmeteil zentriert ist, in welchem die Lager der eintreibenden Welle aufgenommen sind. Somit wird nicht das Gehäuseteil des Getriebes, sondern das Aufnahmeteil, welches die Lagerung aufnimmt, für die Zentrierung verwendet. Somit ist der Elektromotor mit seinem dem Adapterflansch zugewandten Lagerflansch am Adapterflansch zentriert, der wiederum am Aufnahmeteil zentriert ist, in welchem die Lager der eintreibenden Welle zentrisch aufgenommen sind. Auf diese Weise ist der Elektromotor, insbesondere dessen durch ein im Lagerflansch aufgenommenes Lager gelagerte Rotorwelle, koaxial ausgerichtet zur eintreibenden Welle des Getriebes.

Bei einer nicht beanspruchten vorteilhaften Ausgestaltung sind im Aufnahmeteil Lager aufgenommen, deren Innenring auf die eintreibende Welle jeweils aufgesteckt ist.

Bei einer nicht beanspruchten vorteilhaften Ausgestaltung ist der ringförmige Grundkörper in Umfangsrichtung vollständig umlaufend ausgebildet, insbesondere ununterbrochen ausgeformt. Von Vorteil ist dabei, dass eine hohe Stabilität erreichbar ist. Außerdem ist zu dem Elektromotor hin ein drehsymmetrisches Bohrbild vollständig vorsehbar, so dass im Bereich der Unterbrechung trotzdem der Elektromotor befestigbar ist. Auch das Getriebe ist unterbrechungsfrei befestigbar, da das Bohrbild im Axialvorsprung anordenbar ist und somit eine stabile Verbindung zwischen dem Adapterflansch und dem Gehäuseteil des Getriebes herstellbar ist.

Bei einer nicht beanspruchten vorteilhaften Ausgestaltung weist der größte Wert des vom Axialvorsprung überdeckten Radialabstandbereichs als Funktion des Umfangswinkels vier lokale Maxima auf,
insbesondere wobei jeder von einem zweiten Bohrloch überdeckte Umfangswinkelbereich den zu einem jeweiligen lokalen Maximum gehörigen Umfangswinkel enthält. Von Vorteil ist dabei, dass die Bohrungen des dem Getriebe zugewandten Bohrbildes in den radial breiteren Bereichen des Axialvorsprungs angeordnet sind.

Bei einer nicht beanspruchten vorteilhaften Ausgestaltung weist der Axialvorsprung eine zum Getriebe hin gewandte fein bearbeitete Fläche auf, deren kleinster Radialabstand in einem Teilbereich des vom Axialvorsprung überdeckten Umfangswinkelbereichs konstant ist,
insbesondere wobei der Teilbereich mehr als 80% des vom Axialvorsprung überdeckten Umfangswinkelbereichs überdeckt. Von Vorteil ist dabei, dass eine präzise Zentrierung ausführbar ist.

Bei einer nicht beanspruchten vorteilhaften Ausgestaltung ist ein Deckelteil mit dem Aufnahmeteil verbunden, insbesondere mittels einer zwischengeordneten Dichtung, insbesondere Flachdichtung, dicht verbunden, ist,
wobei im Deckelteil ein Wellendichtring aufgenommen ist, der zur eintreibenden Welle hin abdichtet, insbesondere dessen Dichtlippe auf einer an der eintreibenden Welle ausgebildeten Dichtfläche läuft. Von Vorteil ist dabei, dass der eintreibende Bereich, insbesondere die Lagerung der eintreibenden Welle, öldicht abgeschlossen ist. Außerdem ist durch Aufsetzen und Verbinden des Deckelteils ein Wellendichtring aktiviert, der die Abdichtung weiter verbessert. Dabei weist das Deckelteil einen Zentrierkragen auf, mit welchem das Deckelteil an dem Aufnahmeteil ausrichtbar ist. Auf diese Weise ist der im Deckelteil aufgenommene Wellendichtring koaxial zentriert zu der eintreibenden Welle des Getriebes, obwohl die Lager im Aufnahmeteil aufgenommen sind und somit bei der Herstellung die Bearbeitung der Lagersitze in einem einzigen Arbeitsgang mit einer Werkzeugmaschine durchführbar ist.

Bei einer nicht beanspruchten vorteilhaften Ausgestaltung sind ein Druckring und ein Klemmring auf die eintreibende Welle aufgesteckt, wobei der Druckring an einem ersten der Lager anliegt, wobei der Klemmring kraftschlüssig mit der eintreibenden Welle verbunden ist, insbesondere wobei axial gerichtete Schrauben am Klemmring abgestützt und in axial gerichtete Gewindebohrungen des Druckrings eingeschraubt, so dass die am Klemmring abgestützten Schrauben den Druckring gegen das erste Lager drücken, insbesondere gegen den Innenring des ersten Lagers drücken. Von Vorteil ist dabei, dass eine einfache Anordnung zur Herstellung der Lagerspannung verwendbar ist.

Bei einer nicht beanspruchten vorteilhaften Ausgestaltung ist das Gehäuse einer Wellenendpumpe mit dem Gehäuseteil verbunden und eine Zwischenwelle des Getriebes ist mit einem drehbaren Teil der Wellenendpumpe drehfest verbunden, insbesondere und dieses antreibt. Von Vorteil ist dabei, dass Öl passiv, insbesondere also ohne elektromotorisch angetriebene Pumpe, sondern durch eine durch die bei Betrieb sich drehende Zwischenwelle angetriebene Pumpe, förderbar ist.

Bei einer nicht beanspruchten vorteilhaften Ausgestaltung gelangt von der Wellenendpumpe aus dem Ölsumpf gefördertes Öl durch einen im Gehäuseteil angeordneten ersten Kanal, insbesondere durch einen durch das Gehäuseteil durchgehenden, ersten Kanal, welcher in einen zweiten, durch das Aufnahmeteil durchgehenden Kanal mündet, und durch den zweiten Kanal zum weiter von der Zwischenwelle entfernt angeordneten Lager,
insbesondere wobei der erste Kanal aus ins Gehäuseteil eingebrachten Bohrungen gebildet ist und/oder wobei der zweite Kanal aus ins Aufnahmeteil eingebrachten Bohrungen gebildet ist. Von Vorteil ist dabei, dass eine passive Schmierung der Kegelgetriebestufe und vor allem deren Lager ermöglicht ist, auch wenn die eintreibende Welle vertikal ausgerichtet ist, also die Drehachse der eintreibenden Welle parallel zur Gravitationsrichtung ausgerichtet ist.

Bei einer nicht beanspruchten vorteilhaften Ausgestaltung ist im Gehäuseteil ein dritter Kanal angeordnet, der zum ersten Kanal spiegelsymmetrisch ausgeführt ist, insbesondere zu einer Spiegelebene, welche die Drehachse der eintreibenden Welle enthält. Von Vorteil ist dabei, dass die Wellenendpumpe alternativ am anderen Ende der Zwischenwelle anordenbar ist und somit eine gleichartige Kanalstruktur vorhanden ist. Optional sind sogar an beiden Enden der Zwischenwelle jeweils eine Wellenendpumpe anordenbar. Somit ist die langsamer als die eintreibende Welle sich drehende Zwischenwelle trotzdem zur Förderung eines großen Ölstroms verwendbar. Denn durch die zwei, wenn auch langsamer angetriebenen Wellenendpumpen ist ein großer Ölstrom förderbar.

Bei einer nicht beanspruchten vorteilhaften Ausgestaltung ist im Aufnahmeteil ein vierter Kanal angeordnet, der zum zweiten Kanal spiegelsymmetrisch ausgeführt ist, insbesondere zu einer Spiegelebene, welche die Drehachse der eintreibenden Welle enthält. Von Vorteil ist dabei, dass die Wellenendpumpe alternativ am anderen Ende der Zwischenwelle anordenbar ist und somit eine gleichartige Kanalstruktur vorhanden ist. Optional sind sogar an beiden Enden der Zwischenwelle jeweils eine Wellenendpumpe anordenbar. Somit ist die langsamer als die eintreibende Welle sich drehende Zwischenwelle trotzdem zur Förderung eines großen Ölstroms verwendbar. Denn durch die zwei, wenn auch langsamer angetriebenen Wellenendpumpen ist ein großer Ölstrom förderbar.

Bei einer nicht beanspruchten vorteilhaften Ausgestaltung weist der erste Kanal eine erste, radial gerichtete, ins Gehäuseteil eingebrachte Sacklochbohrung auf, die in eine zweite, axial gerichtete, ins Gehäuseteil eingebrachte, zur Umgebung mit einem Verschlussstopfen verschlossene Sacklochbohrung mündet, welche eine dritte, radial gerichtete, durch das Gehäuseteil durchgehende Bohrung kreuzt, die in eine vierte, radial gerichtete, ins Aufnahmeteil eingebrachte Bohrung mündet, die eine fünfte, axial gerichtete, ins Aufnahmeteil eingebrachte Sacklochbohrung kreuzt,
insbesondere wobei die vierte Bohrung zur eintreibenden Welle hin mittels eines Stopfens nur unvollständig verschlossen und/oder öldurchlässig angeordnet ist, wobei der Stopfen in axialer Richtung zwischen den Lagern der eintreibenden Welle angeordnet ist und somit von der Wellenendpumpe gefördertes Öl aus der vierten Bohrung am Stopfen vorbei in axialer Richtung zwischen den Lagern der eintreibenden Welle austritt und das unterhalb der vierten Bohrung angeordnete Lager der beiden Lager der eintreibenden Welle mit Öl versorgt, insbesondere wobei der erste Kanal einen Auslass oberhalb der Lager der eintreibenden Welle aufweist. Von Vorteil ist dabei, dass über den Auslass das obere der Lager versorgt wird und über den öldurchlässig angeordneten Stopfen das untere der Lager versorgt wird mit Öl.

Bei einer nicht beanspruchten vorteilhaften Ausgestaltung umfasst der erste Kanal die erste, zweite und dritte Bohrung. Von Vorteil ist dabei, dass eine einfache Herstellung durch Einbringen von Bohrungen ausführbar ist. Besonders vorteilhaft werden aber Sacklochbohrungen verwendet, da diese dann keinen Verschlussstopfen benötigen.

Bei einer nicht beanspruchten vorteilhaften Ausgestaltung weist das Aufnahmeteil zwei in Umfangsrichtung voneinander, beabstandete durch das Aufnahmeteil durchgehende Radialbohrungen auf, die an derselben axialen Stelle des Aufnahmeteils angeordnet sind, insbesondere also denselben axialen Bereich überdecken. Von Vorteil ist dabei, dass einerseits zumindest eine der Bohrungen als Eintrittsöffnung für Öl fungiert und somit Öl, das gefiltert und gefördert ist, in den Zwischenraumbereich zwischen eintreibender Welle und dem Aufnahmeteil fließt, so dass das Öl an der eintreibenden Welle entlang zu demjenigen der beiden Lager der eintreibenden Welle herunterfließt, das in Gravitationsrichtung weiter unten angeordnet ist.

Bei einer nicht beanspruchten vorteilhaften Ausgestaltung ist ein Kegelritzel mit der eintreibenden Welle drehfest verbunden, das mit einem mit der Zwischenwelle drehfest verbundenen Kegelrad im Eingriff ist,
wobei ein schrägverzahntes Stirnrad mit der Zwischenwelle drehfest verbunden ist, das mit einem mit der abtreibenden Welle des Getriebes drehfest verbundenen Zahnrad im Eingriff ist,
insbesondere wobei eine von einer in die eintreibende Welle eingeschraubten Schraube formschlüssig gehaltene Scheibe das Kegelritzel in axialer Richtung begrenzt. Von Vorteil ist dabei, dass einer eintreibenden Kegelgetriebestufe eine Stirnradstufe folgt. Die Zahnräder der Stirnradstufe sind schrägverzahnt ausführbar. Somit ist ein geräuscharmer Betrieb erreichbar.

Die Erfindung wird nun anhand von schematischen Abbildungen näher erläutert:

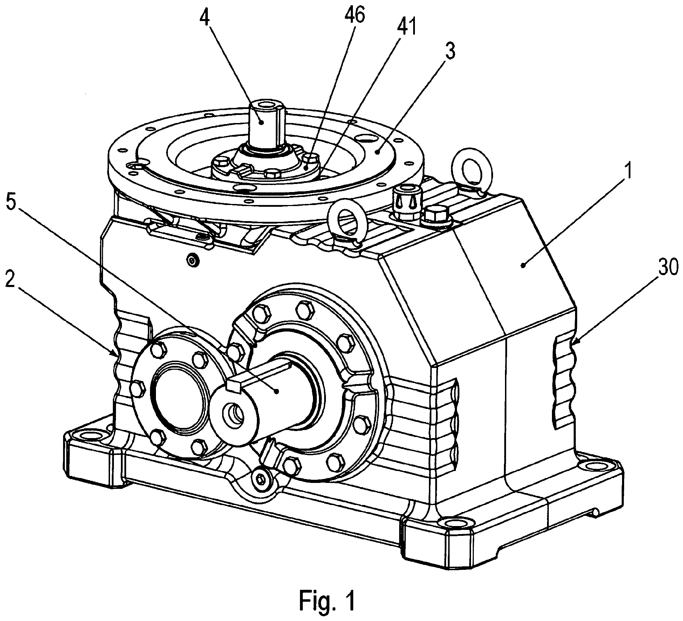

In der Figur 1 ist ein Getriebe mit einem Adapterflansch 3 zur Verbindung mit einem Elektromotor in Schrägansicht dargestellt.

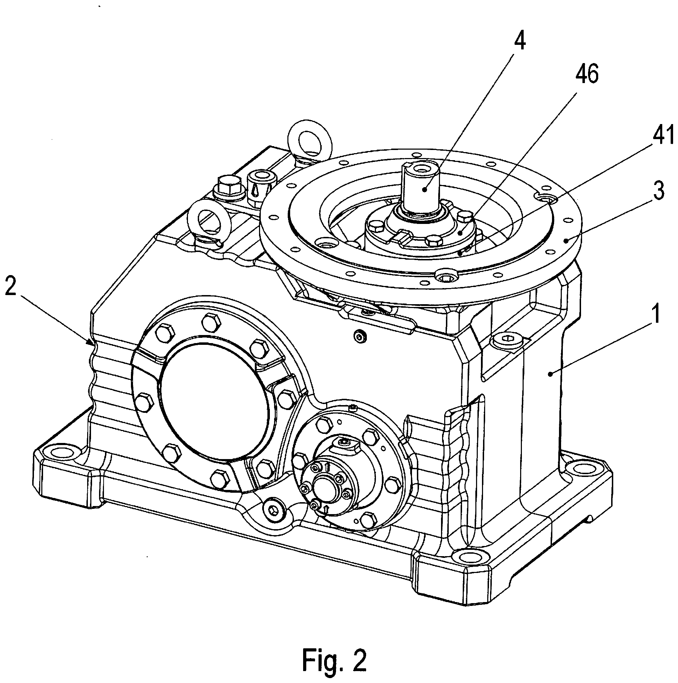

In der Figur 2 ist das Getriebe aus einer anderen Blickrichtung dargestellt.

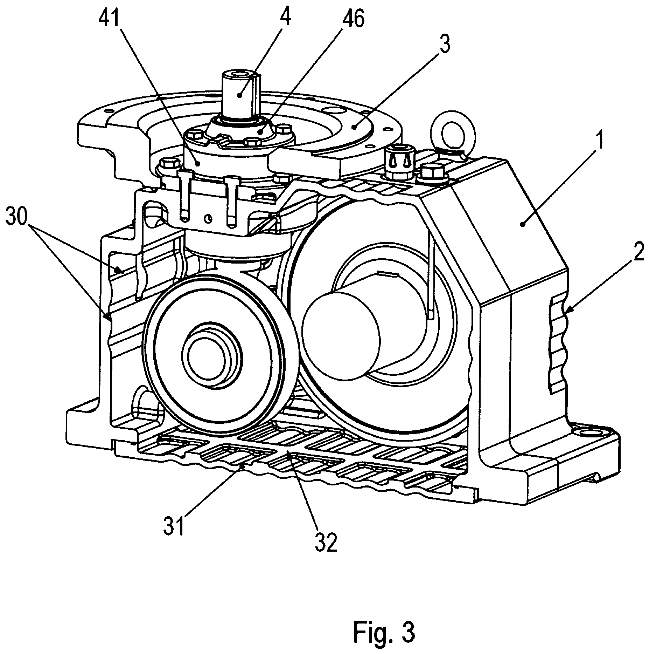

In der Figur 3 ist das Getriebe angeschnitten dargestellt.

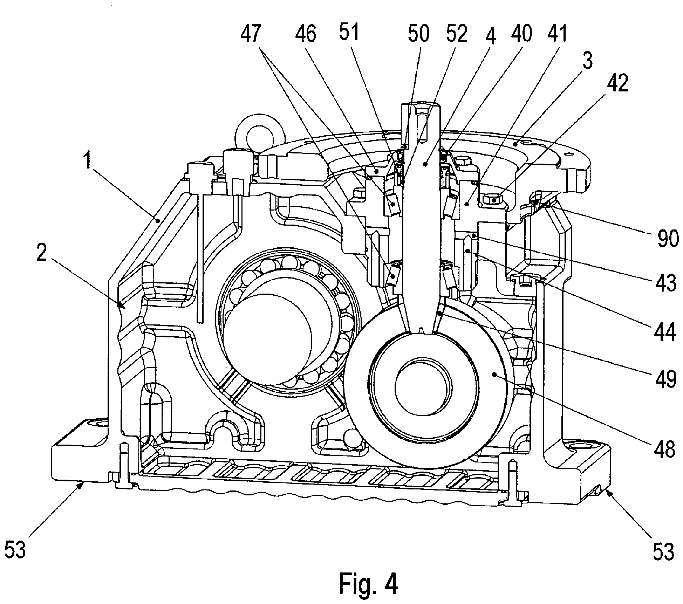

In der Figur 4 ist eine weitere Schnittansicht des Getriebes dargestellt.

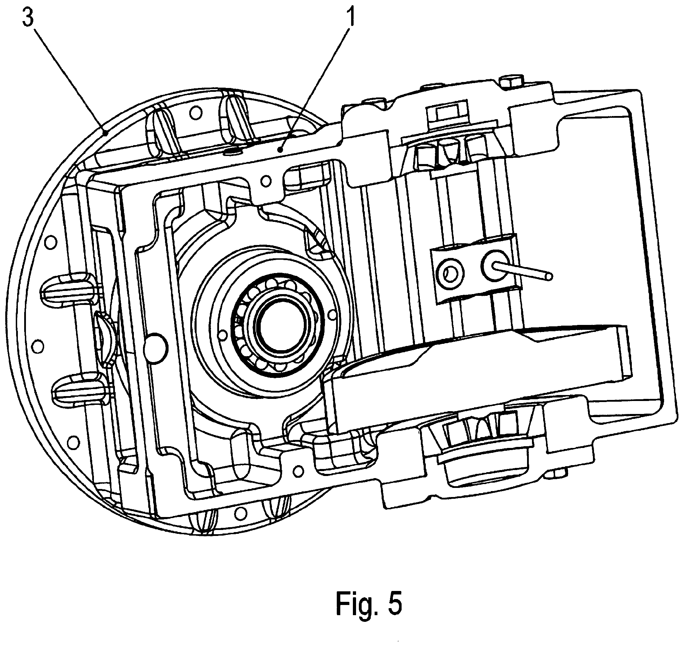

In der Figur 5 ist ein dazu senkrecht ausgeführter Schnitt des Getriebes dargestellt.

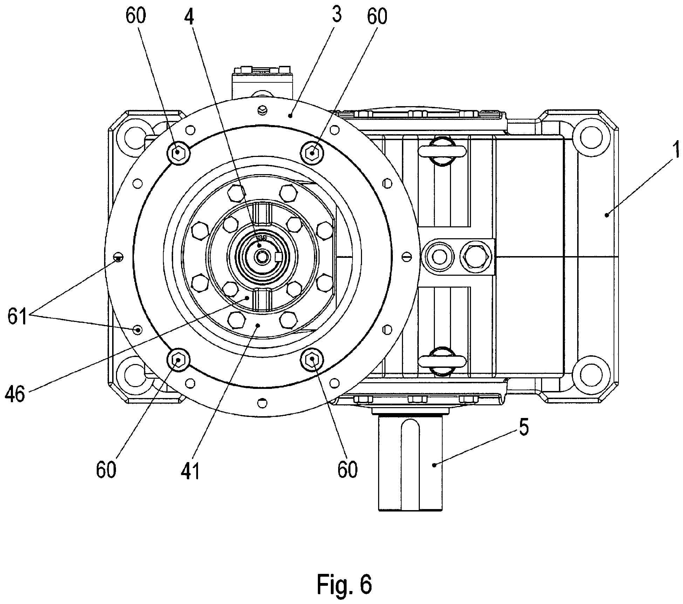

In der Figur 6 ist eine zur Figur 1 gehörige Draufsicht auf das Getriebe mit Adapterflansch 3 dargestellt.

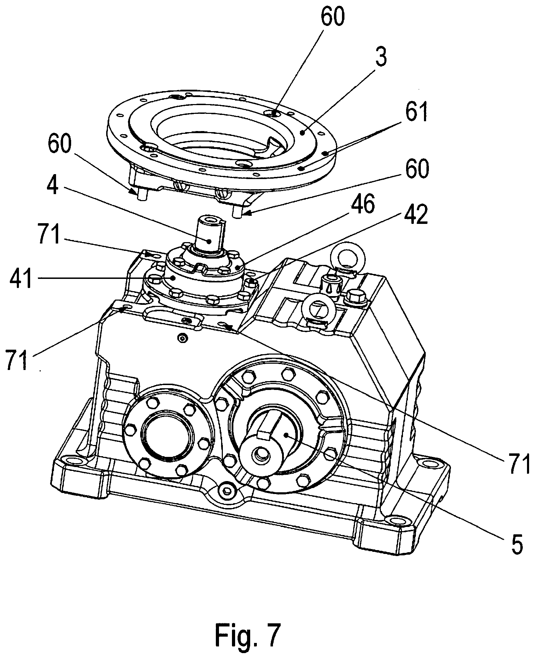

In der Figur 7 ist das Getriebe mit einem explodiert dargestellten Adapterflansch 3 in Schrägansicht ausgeführt.

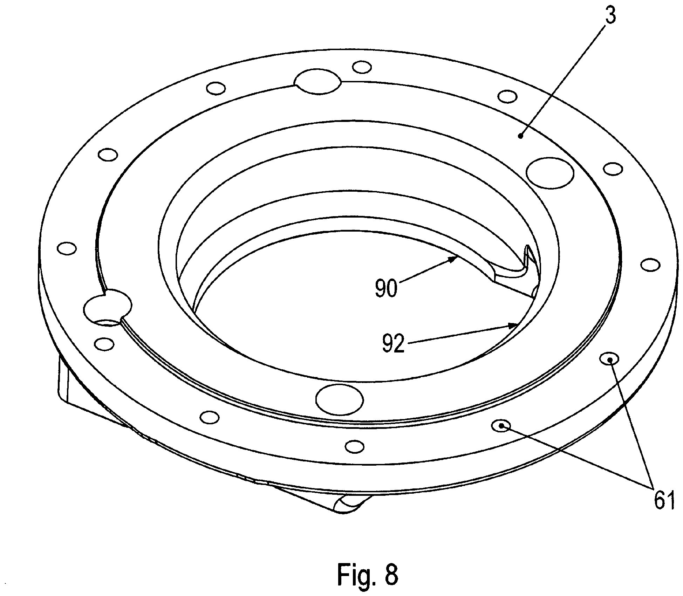

In der Figur 8 ist der Adapterflansch 3 aus einer ersten Blickrichtung in Schrägansicht dargestellt.

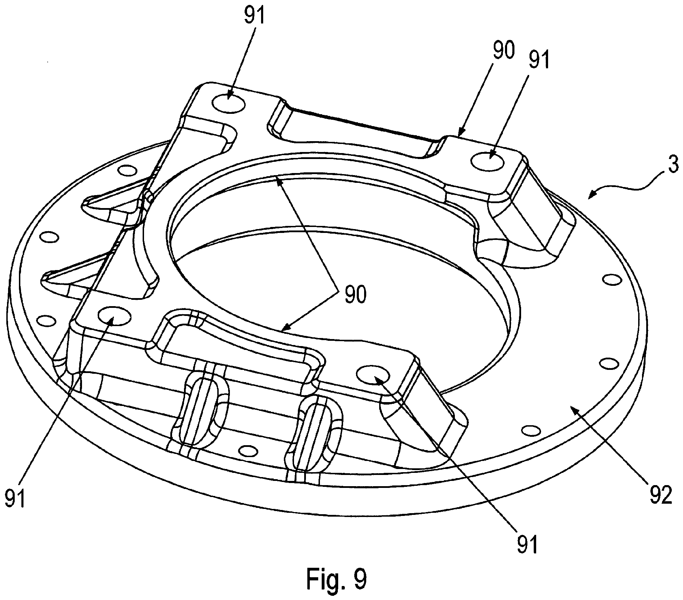

In der Figur 9 ist der Adapterflansch 3 aus einer zweiten Blickrichtung in Schrägansicht dargestellt.
In der Figur 10 ist eine Schnittansicht des Getriebes derart dargestellt, dass der eintreibende Bereich des Getriebes erkennbar ist.

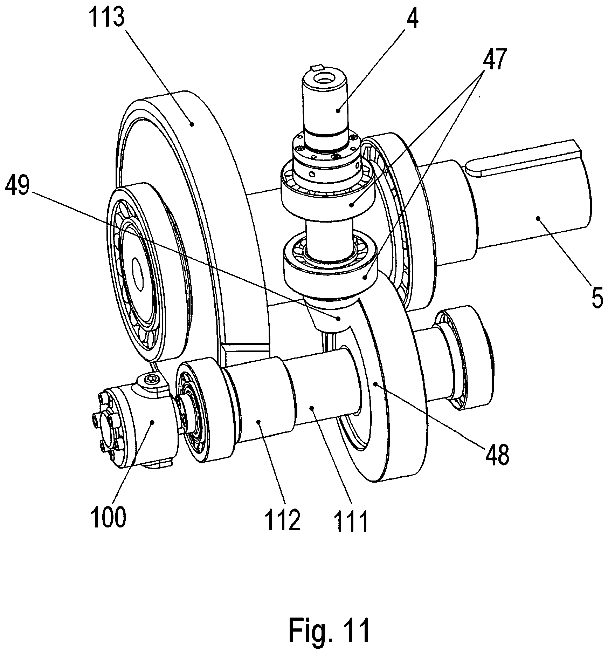

In der Figur 11 sind die Wellen, Verzahnungsteile und Lager des Getriebes in Schrägansicht dargestellt, wobei das Gehäuseteil 1 des Getriebes und das Schmieröl des Getriebes weggelassen wurden.

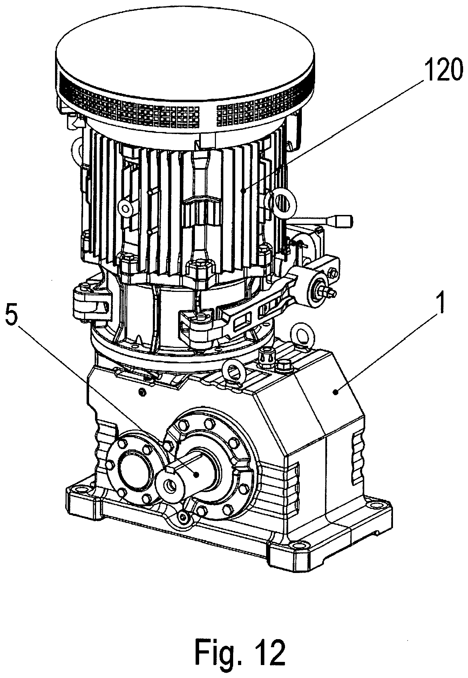

In der Figur 12 ist das mit einem Elektromotor 120 verbundene Getriebe in Schrägansicht dargestellt.

Wie in den Figuren dargestellt, wird zwischen dem Elektromotor 120 und dem Gehäuseteil 1 des Getriebes ein Adapterflansch 3 angeordnet, so dass der Elektromotor 120 am Adapterflansch zentrierbar ist und mittels Schrauben an den Adapterflansch 3 montierbar ist.

Der Adapterflansch 3 ist am Gehäuseteil 1 zentriert und mittels Schrauben mit dem Gehäuseteil 1 verbunden.

Der Adapterflansch 3 weist an seiner zum Elektromotor 120 hin gewandten Seite eine kreisrunde Außenform auf. Insbesondere ist der größte Außenumfang des Adapterflansches 3 kreisrund ausgeführt, insbesondere als zylinderförmige Außenkontur.

Die dem Motor 120 zugewandte mechanische Schnittstelle, insbesondere aufweisend einen Zentrierbund und ein Bohrbild, weist eine Drehsymmetrie auf, insbesondere bezogen auf die Drehachse der eintreibenden Welle 4. Die Drehsymmetrie ist mindestens diskret, kann aber auch kontinuierlich ausgeführt sein.

Radialabstände sind hier stets auf die Drehachse der eintreibenden Welle 4 bezogen. Ebenso ist die axiale Richtung parallel zu der Drehachse der eintreibenden Welle 4. Auch die Umfangsrichtung ist auf die Drehachse der eintreibenden Welle 4 bezogen.

Auf seiner dem Getriebegehäuse 1 zugewandten Seite weist der Adapterflansch 3 einen axial zum Gehäuseteil 1 hervorragenden Axialvorsprung 90 auf, der in Umfangsrichtung aber durch einen verdünnten Wandbereich 92 unterbrochen ist. Dabei weist der verdünnte Wandbereich 92 in axialer Richtung eine geringere Ausdehnung, insbesondere Wandstärke, auf als in dem von dem Axialvorsprung 90 überdeckten Umfangswinkelbereich.

Der Adapterflansch 3 weist also vorzugsweise einen ringförmigen Grundkörper auf, der rotationssymmetrisch zur Drehachse der eintreibenden Welle 4 des Getriebes ausgebildet ist und an dem der Axialvorsprung 90 getriebeseitig angeformt ist, der aber nicht rotationssymmetrisch ist, sondern in einem Umfangswinkelbereich unterbrochen ist. In diesen unterbrochenen Umfangswinkelbereich ragt das Gehäuseteil 1, insbesondere eine das abtreibende Zahnrad 113 zumindest teilweise gehäusebildend umgebende Auswölbung des Gehäuseteils 1, hinein, wobei der vom Gehäuseteil 1 in diesem unterbrochenen Bereich, also in diesem Umfangswinkelbereich und in dem von dem Grundkörper in axialer Richtung überdeckten Bereich, überdeckte Radialabstandsbereich mit demjenigen Radialabstandsbereich überlappt, der vom Grundkörper überdeckt wird.

Somit ragt also das Gehäuseteil 1 in den unterbrochenen Bereich des Axialvorsprungs 90 hinein.

In dem Axialvorsprung 90 sind axial gerichtete Bohrlöcher 91 eingebracht, insbesondere die ein rechteckiges, insbesondere quadratisches, Bohrbild bilden.

Somit sind die Schrauben zur Verbindung des Gehäuseteils 1 mit dem Adapterflansch 3 in einer rechteckigen Anordnung vorgesehen.

Zum Getriebe hin ist also ein quadratischer Flansch verwendbar und zum Motor 120 hin ist ein Rundflansch verwendbar.

Der Axialvorsprung 90 überdeckt nur einen Teil des gesamten Umfangswinkelbereichs. Der maximal überdeckte Radialabstand als Funktion des Umfangswinkels weist vier lokale Maxima auf.

Der vom jeweiligen Bohrloch 91 überdeckte Umfangswinkelbereich enthält jeweils den Umfangswinkelwert eines jeweiligen der Maxima.

Somit ist das jeweilige Bohrloch 91 jeweils in einem radial verbreiterten Bereich des Axialvorsprungs 90 angeordnet.

Der Axialvorsprung 90 weist an seinem Innenumfang, also an seinem kleinsten Radialabstand, einen innenzylindrischen Oberflächenbereich auf, der allerdings in dem nicht vom Axialvorsprung 90 überdeckten Umfangswinkelbereich unterbrochen ist.

Dieser Innenumfang fungiert als zentrierende Aufnahme für ein Aufnahmeteil 41 des Getriebes. Der innenzylindrische Oberflächenbereich ist koaxial zur Drehachse der eintreibenden Welle 4 ausgerichtet.

Außerdem weist der Axialvorsprung eine fein bearbeitete, axial hervorstehende Kreisringfläche in dem vom Axialvorsprung 90 überdeckten Umfangswinkelbereich auf.

Mittels dieser Kreisringfläche wird der Adapterflansch 3 an fein bearbeitete ebene Flächenbereiche des Gehäuseteils 1 angelegt. Dabei ist in jede der fein bearbeiteten ebenen Flächenbereiche eine jeweilige axial gerichtete Bohrung, insbesondere Gewindebohrung, eingebracht, wobei Schrauben durch die Bohrlöcher 91 geführt sind und in die in die fein bearbeiteten ebenen Flächenbereiche des Gehäuseteils 1 eingebrachten Gewindebohrungen 71 eingeschraubt sind.

Die Kreisringfläche des Axialvorsprungs 90 und die Flächenbereiche, in welche die Bohrlöcher 91 eingebracht sind, befinden sich auf derselben axialen Position. Diese axiale Position ist die vom Elektromotor 120 am weitest entfernte, vom Adapterflansch 3 bedeckte Position.

Der verdünnte Wandbereich 92 des Adapterflansches 3 liegt auf einer Auswölbung, insbesondere Erhöhung, des Gehäuseteils 1 auf oder weist zumindest nur einen geringen Abstand auf. Diese Auswölbung umgibt ein mit der abtreibenden Welle verbundenes Zahnrad 113 zumindest teilweise gehäusebildend.

Die abtreibende Welle 5 ist senkrecht zur eintreibenden Welle 4 ausgerichtet.

Das mit der abtreibenden Welle 5 drehfest verbundene Zahnrad 113 zusammen mit der Auswölbung überdeckt in Richtung der Drehachse der abtreibenden Welle einen Bereich, welcher den von den Lagern 47 der eintreibenden Welle 4 überdeckten Bereich umfasst.

Der Elektromotor 120 weist ein Statorgehäuse auf, das axial beidseitig mit jeweils einem als Rundflansch ausgeführten Lagerflansch verbunden ist. Jeder der beiden Lagerflansche nimmt jeweils ein Lager auf, das auf die Rotorwelle des Elektromotors 120 aufgesteckt ist. Somit ist die Rotorwelle über die beiden in den Lagerflanschen aufgenommenen Lager drehbar gelagert.

Die beiden Lagerflansche sind als Rundflansch ausgeführt. Daher weisen sie einen im Wesentlichen kreisrunden Außenumfang auf. Das Bohrbild für die Verbindungsschrauben zur Verbindung des ersten der beiden Lagerflansche mit dem Adapterflansch 3 weist eine diskrete Drehsymmetrie auf, wobei die Drehsymmetrieachse der Drehachse der Rotorwelle entspricht, insbesondere also der Drehachse der zur Rotorwelle koaxial angeordneten eintreibenden Welle 4. Der Adapterflansch 3 weist zum ersten Lagerflansch des Elektromotors 120 hin ebenfalls ein Bohrbild mit derselben diskreten Drehsymmetrie auf.

Die Lager 47 sind in einem Aufnahmeteil 41 aufgenommen, das einen nach radial außen hervorragenden, in Umfangsrichtung umlaufenden Kragen aufweist, welcher mittels Schrauben, die in axial gerichtete Gewindebohrungen des Gehäuseteils 1 eingeschraubt sind, an das Gehäuseteil 1 angepresst wird.

Dabei ist an diesem Kragen eine Stufe fein bearbeitet und somit zur Zentrierung am Gehäuseteil 1 geeignet ausgeführt.

Die Lager 47 sind auf die eintreibende Welle 4 aufgesteckt, die somit drehbar gelagert ist.

Ein Deckelteil 46 ist mittels in Gewindebohrungen des Aufnahmeteils 41 eingeschraubten Schrauben, insbesondere mittels der Schraubenköpfe dieser Schrauben, an das Aufnahmeteil 41 angedrückt. Im Deckelteil 46 ist ein Wellendichtring 40 aufgenommen, der das Deckelteil 46 zur eintreibenden Welle 4 hin abdichtet.

Auf der eintreibenden Welle 4 sind ein an einem ersten der Lager 47 anliegender Druckring 52 und ein Klemmring 50 aufgesteckt, wobei der Klemmring 50 kraftschlüssig mit der eintreibenden Welle 4 verbunden ist. Axial gerichtete Schrauben 51 sind am Klemmring 50 abgestützt und in axial gerichtete Gewindebohrungen des Druckrings 52 eingeschraubt, so dass die am Klemmring 50 abgestützten Schrauben den Druckring 52 gegen das erste Lager
47 drücken. Insbesondere drückt hierbei der Druckring 52 auf den Innenring des ersten Lagers 47.

Die eintreibende Welle 4 ist durch das Deckelteil 46 durchgesteckt.

Die eintreibende Welle 4 ist drehfest mit einem Kegelritzel 49 verbunden, dessen Verzahnung mit der Verzahnung eines Rads 48, insbesondere Kegelrads, im Eingriff ist.

Der Außenring des ersten Lagers 47 ist gegen einen Absatz des Aufnahmeteils 41 angestellt.

Das Kegelritzel 49 ist auf einen konusförmigen Endbereich der eintreibenden Welle 4 aufgesteckt und mittels einer Scheibe axial gesichert, die von einer in der Stirnseite der eintreibenden Welle 4 mittig eingeschraubten Schraube an die Stirnseite der eintreibenden Welle 4 angepresst wird. Außerdem ist das Kegelritzel 49 kraftschlüssig und/oder formschlüssig verbunden, insbesondere mittels Passfederverbindung.

Am Deckelteil 46 ist ein axial hervorragender, in Umfangsrichtung umlaufender Zentrierkragen ausgeformt, der an einem am Aufnahmeteil 41 ausgebildeten Zentriersitz ausgerichtet und zentriert ist.

Das Kegelritzel 49 ist im Eingriff mit der Verzahnung eines Rads 48, insbesondere Kegelrads.

Das Rad 48 ist drehfest mit einer Zwischenwelle 111 verbunden, die mittels im Gehäuseteil aufgenommener Lager drehbar gelagert ist und drehfest verbunden ist mit einer Verzahnung 112, die im Eingriff ist mit der Verzahnung eines Zahnrads 113, das drehfest mit der abtreibenden Welle 5 verbunden ist.

Somit weist das erfindungsgemäße, vorzugsweise zweistufige Getriebe eine eintreibende Kegelgetriebestufe auf, der eine abtreibend angeordnete Stirnradgetriebestufe folgt. Die

Verzahnungen der Stirnradgetriebestufe weisen vorzugsweise jeweils einen nicht verschwindenden Schrägungswinkel auf.

Mit der Zwischenwelle 111 ist eine Wellenendpumpe 100 verbunden. Somit wird diese Wellenendpumpe zwar nicht von der schnell drehenden eintreibenden Welle 4 angetrieben, sondern von der Zwischenwelle 111, die aber immerhin schneller dreht als die abtreibende Welle 5.

Der Ölpegel des im Innenraum des Getriebes angeordneten Öls überdeckt oder erreicht die Ritzelverzahnung. Jedoch sind beide Lager 47 der eintreibenden Welle 4 oberhalb des Ölpegels angeordnet und somit nach langem Stillstand des Getriebes nicht geschmiert.

Sobald das Getriebe in Betrieb genommen wird, pumpt daher die von der Zwischenwelle 111 angetriebene Wellenendpumpe 100 Öl vom unterhalb des Ölpegels angeordneten Ölsumpf zu einer oberhalb der Lager 47 angeordneten Position, so dass die Lager 47 geschmiert sind und auch der Wellendichtring 40 nicht trockenläuft.

Die eintreibende Welle 4 ist parallel zur Normalenrichtung der Oberfläche des Ölsumpfes ausgerichtet, insbesondere bei längerem Stillstand des Getriebes.

Die sonstigen Lager, Verzahnungen (112, 49) und Zahnräder (48, 113) sind stets zumindest teilweise in den Ölsumpf des Getriebes eingetaucht.

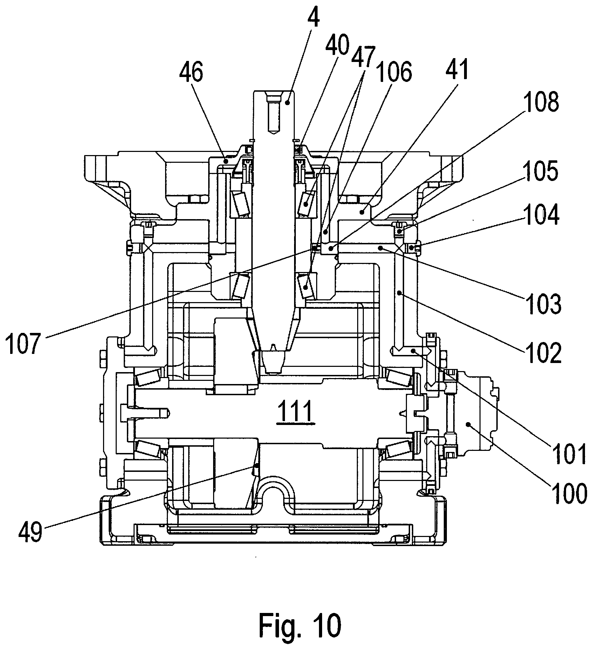

Wie in Figur 10 dargestellt, fördert die Wellendpumpe 100 Öl in eine radial gerichtete Bohrung 101 des Gehäuseteils 1. Diese ist als Sacklochbohrung von außen eingebracht und mündet in eine axial gerichtete Bohrung 102 des Gehäuseteils 1, welche ebenfalls von außen eingebracht ist, als Sacklochbohrung ausgeführt ist und an ihrem dem Elektromotor 120 zugewandten Ende mit einem Verschlussstopfen 105 verschlossen ist.

Eine durch das Gehäuseteil 1 durchgehende, radial gerichtete Bohrung 103 kreuzt die Bohrung 102 und mündet in eine in das Aufnahmeteil 41 eingebrachte, durch das Aufnahmeteil 41 durchgehende Radialbohrung 108, die zur eintreibenden Welle 4 hin mit einem Stopfen 107 verschlossen, der aber nicht vollständig dicht ist, sondern eine geringe Ölmenge durchlässt, die dann in einem Spalt zwischen dem Gehäuseteil 1 und der eintreibenden Welle 4 zum unteren, also vom Elektromotor 120 weiter entfernten Lager 47 gelangt.

Eine axial gerichtete, von außen ins Aufnahmeteil 41 eingebrachte Sacklochbohrung 106 mündet in die Radialbohrung 108, so dass das von der Wellenendpumpe 100 geförderte Öl am dem Deckelteil 46 zugewandten Ende des Aufnahmeteils 41 austritt und das obere, also dem Elektromotor 120 zugewandte Lager 47 mit Öl versorgt. Somit wird dann auch das unterhalb des ersten Lagers 47 angeordnete zweite Lager 47 versorgt.

Die beiden Lager 47 sind vorzugsweise als Schräglager ausgeführt.

Das mit dem Gehäuseteil 1 öldicht verbundene Aufnahmeteil 41 umgibt zusammen mit dem mit dem Aufnahmeteil 41 öldicht verbundenen Deckelteil 46 den Innenraumbereich des Getriebes.

Bei Betrieb des Getriebes und somit Drehbewegung der Zwischenwelle 111 wird von der Wellenendpumpe 100 Öl entgegen der Gravitationsrichtung gefördert und somit die Lager 47 mit Öl geschmiert. Außerdem nimmt das an den Lagern 47 vorbeiströmende Öl Verlustwärme auf, die danach vom Ölsumpf an die Umgebung abgeführt wird.

Um einen möglichst geringen Wärmeübergangswiderstand vom Ölsumpf zur Umgebung oder zumindest zum Gehäuseteil 1 hin zu erreichen, sind an der Innenseite des Gehäuseteils 1 Bereiche mit insbesondere voneinander regelmäßig beabstandeten Vertiefungen 30 ausgebildet.

In diesen Bereichen ist die Wandstärke vorzugsweise nicht konstant, sondern die Bereiche sind an ihrer Außenseite glatt, insbesondere eben, ausgeführt.

Somit variiert die Wandstärke in diesen Bereichen synchron mit den Vertiefungen 30.

Jede der Vertiefungen 30 erstreckt sich dabei senkrecht zur axialen Richtung, also senkrecht zur Drehachse der eintreibenden Welle 4, mehr als in axialer Richtung.

Vorzugsweise sind die Vertiefungen 30 unterhalb des Ölpegels angeordnet und bieten somit an der Innenseite eine vergrößerte Oberfläche, so dass der Wärmeübergangswiderstand vom Öl zum Gehäuseteil 1 verringert wird und die Wärme in den zwischen den Vertiefungen 30 angeordneten, insbesondere durch die ebene Ausführung des jeweiligen Bereichs an der Außenseite, verdickten Zonen aufnehmbar ist, insbesondere infolge der durch die Verdickung erzeugten größeren Wärmekapazität. Von dort wird die Wärme dann im Gehäuseteil 1 aufgespreizt und an die Umgebung abgeleitet.

In weiteren Bereichen sind an der Außenseite des Gehäuseteils Vertiefungen 2 vorgesehen, wobei in diesen weiteren Bereichen die Wandstärke konstant ist. Somit sind nicht nur an der Außenseite insbesondere voneinander regelmäßig beabstandete Vertiefungen 2 sondern auch an der Innenseite entsprechende Vertiefungen ausgeformt.

Jede der Vertiefungen 2 erstreckt sich dabei ebenfalls senkrecht zur axialen Richtung, also senkrecht zur Drehachse der eintreibenden Welle 4, mehr als in axialer Richtung.

Somit sind die Vertiefungen 2 zur Erreichung eines besonderen, Herkunft-kennzeichnenden Designeindrucks am Gehäuseteil 1 ausformbar. Hingegen dienen die nur an der Innenseite ausgeprägten Vertiefungen 30 nicht dem Designeindruck, sondern der Verbesserung der Wärmeableitung.

An der Unterseite des Getriebes ist der Innenraum des Getriebes mittels eines Getriebedeckels 31 verschlossen, der ebenfalls Vertiefungen 2 mit konstanter Wandstärke aufweist, wobei aber an der Innenseite des Getriebedeckels Versteifungsrippen 32 ausgeformt sind, die sich gegenseitig kreuzen. Somit ist der Getriebedeckel 31 einerseits steif und vermittelt auch einen Herkunft-kennzeichnenden Designeindruck, wobei somit die Unterseite des Ölsumpfes beruhigt wird, da das strömende Öl nicht nur die Versteifungsrippen 32 überwinden, sondern auch zwischen den Versteifungsrippen 32 die Vertiefungen und Erhebungen überwinden muss. Somit bildet sich eine weniger laminare und mehr turbulente Strömung im Ölsumpf aus, wenn das Öl bewegt wird. Dadurch ist ebenfalls der Wärmetransport vom Öl zum Getriebedeckel 31 verbessert.

Im Aufnahmeteil 41 ist eine in Umfangsrichtung von der Radialbohrung 108 beabstandete, durch das Aufnahmeteil 41 durchgehende Radialbohrung 43 angeordnet, in welche eine ins Aufnahmeteil 41 eingebrachte, axial gerichtete Sacklochbohrung mündet, die zum Ölsumpf hin aus dem Aufnahmeteil 41 austritt. Somit ist eine Ölabführung aus dem Raumbereich zwischen der eintreibenden Welle und dem Aufnahmeteil ermöglicht. Insbesondere bei Überdruck in diesem Bereich fungiert diese Ölabführung als Druckentlastung.

Nach radial außen hin ist Radialbohrung 43 mittels des Gehäuseteils 1 verschlossen, in welches das Aufnahmeteil 41 hineinragt. Spiegelsymmetrisch zu einer die Drehachse der eintreibenden Welle enthaltenden Symmetrieebene weist das Aufnahmeteil 41 eine weitere solche Druckentlastung auf.

Auf diese Weise weist also das Aufnahmeteil 41 an derselben axialen Position zwei in Umfangsrichtung voneinander beabstandete, durch das Aufnahmeteil durchgehende Radialbohrungen 43 auf

Bei weiteren nicht beanspruchten Beispielen wird das Kegelritzel 49 mit der eintreibenden Welle einteilig, insbesondere einstückig, ausgeführt.

### Bezugszeichenliste

1 Gehäuseteil
2 Vertiefungen
3 Adapterflansch
4 eintreibende Welle
5 abtreibende Welle
30 Vertiefungen
31 Getriebedeckel
32 Versteifungsrippen
40 Wellendichtring
41 Aufnahmeteil
42 Schaube
43 Radialbohrung
44 Axialbohrung
46 Deckelteil
47 Lager, insbesondere Schrägrollenlager
48 Rad, insbesondere Kegelrad
49 Kegelritzel
50 Klemmring
51 Schrauben
52 Druckring
60 Schraube
61 erste Bohrlöcher
71 Bohrung, insbesondere Gewindebohrung.
90 Axialvorsprung
91 zweites Bohrloch
92 verdünnter Wandbereich
100 Wellenendpumpe
101 Radialbohrung
102 Axialbohrung
103 Radialbohrung
104 Verschlussstofpen
105 Verschlussstopfen
106 Axialbohrung
107 Stopfen
108 Radialbohrung
111 Zwischenwelle
112 Verzahnung
113 Zahnrad
120 Elektromotor

## Patentansprüche

1. Getriebe mit einem Gehäuse, das ein Gehäuseteil (1) aufweist, welches Verzahnungsteile und
Öl zumindest teilweise gehäusebildend umgibt,
**wobei**
- die Wandstärke des Gehäuseteils in einem oder mehreren Bereichen des Gehäuseteils periodisch schwankt, insbesondere entlang einer geraden Richtung,
und in dem oder den Bereichen die äußere Oberfläche glatt, insbesondere eben, ausgeführt ist
- oder **wobei** an der Innenseite, insbesondere also an der dem Öl zugewandten
und/oder inneren Oberfläche, des Gehäuseteils Bereiche mit Vertiefungen, (30)
insbesondere voneinander regelmäßig beabstandeten Vertiefungen, ausgebildet sind, insbesondere wobei die Wandstärke in dem oder den Bereichen synchron mit den Vertiefungen variiert,
**dadurch gekennzeichnet, dass**
**der Getriebemotor, einen Elektromotor und einen Adapterflansch (3), der**
**zwischen dem Getriebe und** dem **Elektromotor (120) angeordnetem Adapterflansch angeordnet ist, aufweist,**
**wobei der Adapterflansch einen zur Drehachse einer eintreibenden Welle** (4) **des**
**Getriebes rotationssymmetrisch ausgeformten, ringförmigen Grundkörper aufweist, an welchem ein Axialvorsprung** (90) **angeformt ist,**
**wobei der Axialvorsprung auf der vom Elektromotor abgewandten Seite des**
**Adapterflansches angeordnet ist,** wobei der vom Gehäuseteil überdeckte Radialabstandsbereich in einem von dem Axialvorsprung nicht überdeckten Umfangswinkelbereich mit dem vom Axialvorsprung überdeckten Radialabstandsbereich überlappt, wobei der vom Gehäuseteil in axialer Richtung überdeckte Bereich mit dem von dem Axialvorsprung in axialer Richtung überdeckten Bereich überlappt, insbesondere in dem von dem Axialvorsprung nicht überdeckten Umfangswinkelbereich und in dem vom Axialvorsprung überdeckten Radialabstandsbereich, mit dem vom Axialvorsprung überdeckten Radialabstandsbereich überlappt, und
**wobei der Axialvorsprung in Umfangsrichtung unterbrochen ausgeführt ist und das Gehäuseteil in den unterbrochenen Bereich hineinragt.**

2. Getriebe nach Anspruch 1,
**dadurch gekennzeichnet, dass**
jede der Vertiefungen sich dabei senkrecht zur axialen Richtung mehr erstreckt, also senkrecht zur Drehachse der eintreibenden Welle 4, als in axialer Richtung.

3. Getriebe nach einem der vorangegangenen Ansprüche,
**dadurch gekennzeichnet, dass**
der oder die Bereiche unterhalb des Ölpegels des Öls angeordnet sind, insbesondere unterhalb des sich bei Stillstand des Getriebes einstellenden Ölpegels angeordnet sind.

4. Getriebe nach einem der vorangegangenen Ansprüche,
**dadurch gekennzeichnet, dass**
in zweiten Bereichen an der Außenseite des Gehäuseteils regelmäßig voneinander beabstandete Vertiefungen ausgebildet sind und in diesen zweiten Bereichen die Wandstärke konstant ist,
insbesondere wobei auch an der Innenseite des Gehäuseteils regelmäßig voneinander beabstandete Vertiefungen ausgebildet sind, die derart von den an der Außenseite des Gehäuseteils ausgebildeten regelmäßig voneinander beabstandete Vertiefungen beabstandet sind, dass die Wandstärke konstant ist.

5. Getriebe nach Anspruch 4,
**dadurch gekennzeichnet, dass**
in den zweiten Bereichen sich jede der Vertiefungen senkrecht zur axialen Richtung mehr erstreckt, also senkrecht zur Drehachse der eintreibenden Welle 4, als in axialer Richtung.

6. Getriebe nach einem der vorangegangenen Ansprüche,
**dadurch gekennzeichnet, dass**
mit dem Gehäuseteil ein Getriebedeckel verbunden ist, insbesondere öldicht verbunden ist, wobei das Gehäuseteil zusammen mit dem Getriebedeckel das Öl begrenzt,
wobei zumindest an einem Bereich des Getriebedeckels an der Außenseite des Getriebedeckels regelmäßig voneinander beabstandete Vertiefungen ausgebildet sind und in diesem Bereich die Wandstärke konstant ist,
insbesondere wobei auch an der Innenseite des Getriebedeckels regelmäßig voneinander beabstandete Vertiefungen ausgebildet sind, die derart von den an der Außenseite des Getriebedeckels ausgebildeten, regelmäßig voneinander beabstandeten Vertiefungen beabstandet sind, dass die Wandstärke konstant ist.

7. Getriebe nach Anspruch 6,
**dadurch gekennzeichnet, dass**
an der Innenseite des Getriebedeckels Versteifungsrippen ausgeformt sind, die sich gegenseitig kreuzen,
insbesondere wobei zwischen den Versteifungsrippen jeweilige Vertiefungen und Erhebungen ausgebildet sind.

8. Getriebe nach Anspruch 7,
**dadurch gekennzeichnet, dass**
die Wandstärke des Getriebedeckels entlang einer ersten der Versteifungsrippen periodisch schwankt, insbesondere entlang einer Richtung, in welcher die erste Versteifungsrippe am weitesten ausgedehnt ist,
wobei die Innenseite der ersten Versteifungsrippe (32) glatt, insbesondere eben, ausgeführt ist.

9. Getriebe nach einem der vorangegangenen Ansprüche,
**dadurch gekennzeichnet, dass**
die räumliche Periodenlänge des Verlaufs der Wandstärke im ersten Bereich des Gehäuseteils der räumlichen Periodenlänge des Verlaufs der Vertiefungen im zweiten Bereich gleicht und/oder der räumlichen Periodenlänge des Verlaufs der Wandstärke entlang der ersten der Versteifungsrippe des Getriebedeckels gleicht.

10. Getriebe nach einem der vorangegangenen Ansprüche, **dadurch gekennzeichnet, dass** die axiale Richtung parallel zur Drehachse der eintreibenden Welle ausgerichtet ist, der Radialabstand der Abstand zur Drehachse der eintreibenden Welle ist und/oder die Umfangsrichtung sich auf diese Drehachse der eintreibenden Welle bezieht.

## Claims

1. A gear unit having a housing which has a housing part (1) which surrounds toothed parts and oil at least partially in a housing-forming manner,
wherein
- the wall thickness of the housing part fluctuates periodically in one or more regions of the housing part, in particular in a straight direction,
and in the region or regions the outer surface is made smooth, in particular flat,
- or wherein on the inner side, in particular therefore on the surface which faces the oil and/or is the inner surface, of the housing part there are formed regions with indentations (30), in particular indentations which are regularly spaced apart from each other, in particular wherein the wall thickness varies synchronously with the indentations in the region or regions,
**characterised in that**
the geared motor has an electric motor and an adapter flange (3) which is arranged between the gear unit and the electric motor (120) [arranged adapter flange],
with the adapter flange having an annular base body formed rotationally symmetrically to the axis of rotation of an input shaft (4) of the gear unit, on which base body an axial projection (90) is formed,
with the axial projection being arranged on that side of the adapter flange which faces away from the electric motor, with the radial distance region covered by the housing part overlapping in an angle-at-circumference region not covered by the axial projection with the radial distance region covered by the axial projection, with the region covered by the housing part in the axial direction overlapping with the region covered by the axial projection in the axial direction, in particular in the angle-at-circumference region not covered by the axial projection and in the radial distance region covered by the axial projection, overlapping with the radial distance region covered by the axial projection, and
with the axial projection being formed interrupted in the peripheral direction and the housing part protruding into the interrupted region.

2. A gear unit according to claim 1,
**characterised in that**
each of the indentations in this case extends perpendicularly to the axial direction, i.e. perpendicularly to the axis of rotation of the input shaft 4, more than in the axial direction.

3. A gear unit according to one of the preceding claims,
**characterised in that**
the region or regions are arranged beneath the oil level of the oil, in particular are arranged beneath the oil level which occurs when the gear unit is at a standstill.

4. A gear unit according to one of the preceding claims,
**characterised in that**
indentations which are regularly spaced apart from each other are formed in second regions on the outer side of the housing part and the wall thickness is constant in these second regions,
in particular with, on the inner side of the housing part as well, there being formed indentations which are regularly spaced apart from each other, which are spaced apart from the indentations which are regularly spaced apart from each other and formed on the outer side of the housing part, in such a way that the wall thickness is constant.

5. A gear unit according to claim 4,
**characterised in that**
in the second regions each of the indentations extends perpendicularly to the axial direction, i.e. perpendicularly to the axis of rotation of the input shaft 4, more than in the axial direction.

6. A gear unit according to one of the preceding claims,
**characterised in that**
a gear unit cover is connected to the housing part, in particular is connected in an oil-tight manner, with the housing part together with the gear unit cover limiting the oil,
with at least on one region of the gear unit cover on the outer side of the gear unit cover there being formed indentations regularly spaced apart from each other and the wall thickness being constant in this region,
in particular with, on the inner side of the gear unit cover as well, there being formed indentations regularly spaced apart from each other, which are spaced apart from those indentations regularly spaced apart from each other which are formed on the outer side of the gear unit cover, in such a way that the wall thickness is constant.

7. A gear unit according to claim 6,
**characterised in that**
stiffening ribs which mutually cross each other are formed on the inner side of the gear unit cover,
in particular with respective indentations and elevations being formed between the stiffening ribs.

8. A gear unit according to claim 7,
**characterised in that**
the wall thickness of the gear unit cover fluctuates periodically along a first one of the stiffening ribs, in particular in a direction in which the first stiffening rib is extended the most,
with the inner side of the first stiffening rib (32) being made smooth, in particular flat.

9. A gear unit according to one of the preceding claims,
**characterised in that**
the spatial period length of the course of the wall thickness in the first region of the housing part is equal to the spatial period length of the course of the indentations in the second region and/or is equal to the spatial period length of the course of the wall thickness along the first of the stiffening rib of the gear unit cover.

10. A gear unit according to one of the preceding claims,
**characterised in that**
the axial direction is oriented parallel to the axis of rotation of the input shaft, the radial distance is the distance from the axis of rotation of the input shaft and/or the peripheral direction refers to this axis of rotation of the input shaft.

## Revendications

1. Transmission munie d'un carter présentant une partie d'enveloppement (1) qui entoure au moins partiellement des parties dentées et de l'huile, avec formation d'un carter,
sachant que
- l'épaisseur de paroi de la partie d'enveloppement fluctue périodiquement dans une ou plusieurs région(s) de ladite partie d'enveloppement, en particulier le long d'une direction rectiligne, et que la surface extérieure est de réalisation lisse, notamment plane dans ladite ou lesdites région(s),
- ou sachant que des régions pourvues de renfoncements (30), en particulier de renfoncements régulièrement espacés les uns des autres, sont ménagées à la face interne, c'est-à-dire au niveau de la surface de ladite partie d'enveloppement qui est tournée vers l'huile et/ou est située à l'intérieur, sachant notamment que l'épaisseur de paroi varie de manière synchrone avec les renfoncements dans ladite ou lesdites région(s),
**caractérisée par le fait que**
le motoréducteur comporte un moteur électrique et une bride d'adaptation (3) interposée entre le réducteur et ledit moteur électrique (120),
ladite bride d'adaptation étant nantie d'un corps annulaire de base conçu avec symétrie rotatoire par rapport à l'axe de rotation d'un arbre d'entrée (4) de la transmission, et sur lequel une protubérance axiale (90) est façonnée,
laquelle protubérance axiale est disposée du côté de ladite bride d'adaptation tourné à l'opposé du moteur électrique, sachant que la plage de distances radiales couverte par la partie d'enveloppement est en chevauchement avec la plage de distances radiales couverte par la protubérance axiale dans une plage d'angles circonférentiels non couverte par ladite protubérance axiale, sachant que la région couverte par ladite partie d'enveloppement, dans la direction axiale, est en chevauchement avec la région couverte par la protubérance axiale dans ladite direction axiale, notamment en chevauchement avec ladite plage de , distances radiales, couverte par ladite protubérance axiale, dans ladite plage d'angles circonférentiels non couverte par ladite protubérance axiale et dans ladite plage de distances radiales couverte par ladite protubérance axiale, et
sachant que la protubérance axiale est de réalisation discontinue dans la direction périphérique, et que la partie d'enveloppement fait saillie dans la région discontinue.

2. Transmission selon la revendication 1, **caractérisée par le fait que**
l'étendue de chacun des renfoncements perpendiculairement à la direction axiale, c'est-à-dire perpendiculairement à l'axe de rotation de l'arbre d'entrée (4), est plus accentuée que dans ladite direction axiale.

3. Transmission selon l'une des revendications précédentes, **caractérisée par le fait que**
la ou les région(s) se trouve(nt) au-dessous du niveau de l'huile et se trouve(nt), en particulier, au-dessous du niveau de l'huile s'instaurant lorsque ladite transmission est à l'arrêt.

4. Transmission selon l'une des revendications précédentes, **caractérisée par le fait que**
des renfoncements régulièrement espacés les uns des autres sont pratiqués dans des secondes régions, à la face externe de la partie d'enveloppement, et l'épaisseur de paroi est constante dans ces secondes régions,
sachant notamment que des renfoncements régulièrement espacés les uns des autres sont pratiqués également à la face interne de la partie d'enveloppement et sont distants, desdits renfoncements régulièrement espacés les uns des autres et pratiqués à la face externe de ladite partie d'enveloppement, de façon telle que ladite épaisseur de paroi soit constante.

5. Transmission selon la revendication 4, **caractérisée par le fait que**
l'étendue de chacun des renfoncements dans les secondes régions perpendiculairement à la direction axiale, c'est-à-dire perpendiculairement à l'axe de rotation de l'arbre d'entrée (4), est plus accentuée que dans ladite direction axiale.

6. Transmission selon l'une des revendications précédentes,
**caractérisée par le fait**
**qu'**un couvercle de ladite transmission est relié à la partie d'enveloppement, notamment relié de manière étanche à l'huile, ladite partie d'enveloppement limitant l'huile en association avec ledit couvercle de la transmission,
sachant que des renfoncements régulièrement espacés les uns des autres sont pratiqués à la face externe du couvercle de la transmission, au moins au niveau d'une région dudit couvercle de la transmission, et que l'épaisseur de paroi est constante dans cette région, sachant notamment que des renfoncements régulièrement espacés les uns des autres sont pratiqués également à la face interne du couvercle de la transmission et sont distants, desdits renfoncements régulièrement espacés les uns des autres et pratiqués à la face externe dudit couvercle de la transmission, de telle façon que l'épaisseur de paroi soit constante.

7. Transmission selon la revendication 6,
**caractérisée par le fait que**
des nervures de rigidification, s'entrecroisant, sont façonnées à la face interne du couvercle de ladite transmission,
sachant notamment qu'il est donné naissance à des renfoncements et à des bossages respectifs entre lesdites nervures de rigidification.

8. Transmission selon la revendication 7,
**caractérisée par le fait que**
l'épaisseur de paroi du couvercle de ladite transmission fluctue périodiquement le long d'une première nervure, parmi les nervures de rigidification, en particulier le long d'une direction dans laquelle l'étendue de ladite première nervure de rigidification est maximale,
sachant que la face interne de ladite première nervure de rigidification (32) est de réalisation lisse, notamment plane.

9. Transmission selon l'une des revendications précédentes,
**caractérisée par le fait que**
la longueur périodique spatiale du profil de l'épaisseur de paroi est égale, dans la première région de la partie d'enveloppement, à la longueur périodique spatiale du profil des renfoncements dans la seconde région, et/ou est égale à la longueur périodique spatiale du profil de ladite épaisseur de paroi le long de la première nervure, parmi les nervures de rigidification du couvercle de ladite transmission.

10. Transmission selon l'une des revendications précédentes,
**caractérisée par le fait que**
la direction axiale est orientée parallèlement à l'axe de rotation de l'arbre d'entrée, la distance radiale étant la distance par rapport audit axe de rotation de l'arbre d'entrée, et/ou la direction périphérique se rapportant à cet axe de rotation dudit arbre d'entrée.
